## Europäisches Patentamt
## European Patent Office
## Office européen des brevets

(19)

(11) Veröffentlichungsnummer: **0 250 925 B1**

# EUROPÄISCHE PATENTSCHRIFT

(12)

(45) Veröffentlichungstag der Patentschrift: **25.03.92**

(51) Int. Cl.⁵: **B60J 7/22**

(21) Anmeldenummer: **87108147.7**

(22) Anmeldetag: **05.06.87**

(54) **Windabweiser für Schiebedächer von Fahrzeugen.**

(30) Priorität: **28.06.86 DE 3621773**

(43) Veröffentlichungstag der Anmeldung:
**07.01.88 Patentblatt 88/01**

(45) Bekanntmachung des Hinweises auf die
Patenterteilung:
**25.03.92 Patentblatt 92/13**

(84) Benannte Vertragsstaaten:
**DE ES FR GB IT**

(56) Entgegenhaltungen:
**DE-A- 2 427 928**
**FR-A- 2 516 871**
**GB-A- 382 781**
**US-A- 4 291 912**

**PATENT ABSTRACTS OF JAPAN vol. 8, no. 61 (M-284)(1498) 23 März 1984, & JP-A-58 211917 (NISSAN JIDOSHA) 09 Dezember 1983,**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Clausen-Schaumann, Andreas**
**Jägerstrasse 15**
**W-8139 Bernried(DE)**

(74) Vertreter: **Dexheimer, Rolf**
**Bayerische Motoren Werke Aktiengesellschaft Postfach 40 02 40 Petuelring 130 - AJ-21**
**W-8000 München 40(DE)**

EP 0 250 925 B1

## Beschreibung

Die Erfindung betrifft einen Windabweiser für Schiebedächer von Fahrzeugen, mit den im Oberbegriff des Patentanspruches 1 angegebenen Merkmalen.

Ein derartiger Windabweiser ist in der FR-A-2 516 871 beschrieben, der einen Teil einer Schlauchdichtung für den Rand einer von einem Deckel verschließbaren Dachöffnung bildet. Bei geöffnetem Dach ragt die aus einem elastischen Material geformte Schlauchdichtung mit ihrer dachartigen Oberseite über die Kontur des Fahrzeugdaches hinaus, wobei der vordere obere Bereich der Schlauchdichtung einen Windabweiser bildet. An dem höchsten Punkt des nach hinten oben ausgestellten Windabweisers schließt sich ein schräg nach hinten unten abfallender Wandabschnitt der Schlauchdichtung an, der beim Öffnen bzw. Schließen des Daches von dem vorderen Rand des Deckels in einer nicht genau vorhersehbaren Weise verlagert wird und dabei den Windabweiser ausstellt bzw. einschwenkt.

Besonders nachteilig ist, daß der dünnwandige Wandabschnitt beim Schließen des Fahrzeugdaches nahezu rechtwinkelig abgeknickt wird. Dadurch läßt zumindest nach einiger Zeit die elastische Spannkraft in dem Wandabschnitt nach, wodurch der Windabweiser einerseits nicht vollständig in seine Betriebsstellung ausgestellt und andererseits durch die während der Fahrt auftretenden Windkräfte eingeschwenkt wird. Durch oftmaliges Abknicken kann sich in dem Wandabschnitt ein bleibender Knick bilden, der dazu führt, daS der Windabweiser in seiner Betriebsstellung unzureichend gestützt ist. Der Innenraum der Schlauchdichtung kann zwar mit einem elastischen, bei geschlossenem Fahrzeugdach komprimierten Schaummaterial gefüllt sein, um das Ausstellen des Windabweisers zu erleichtern, dadurch wird jedoch der Widerstand beim Schließen des Fahrzeugdaches erhöht und eine vertikale Kraft auf den Deckel ausgeübt, der dadurch in seinen Führungen verkanten kann und sich dann entsprechend schwer verschieben läßt.

Das Schließen des Fahrzeugdaches ist auch dadurch erschwert, daS der vordere Rand des Deckels gegen eine von der Aufrichtkraft des Windabweisers abhängige Reibungskraft an den vom Wandabschnitt abstehenden Rippen und an dem Wandabschnitt entlanggleitet. Der eingeschwenkte Windabweiser ist von dem Deckel in Längsrichtung druckbelastet, um ein Abdichten gegenüber dem vorderen Rand des Deckels zu gewährleisten, wodurch der dünnwandige Windabweiser leicht ausknicken kann. Ein Ausknicken des eingeschwenkten Windabweisers kann aber auch durch den Unterdruck der Windströmung an der Oberseite des eingeschwenkten Windabweisers bewirkt werden. Ein wesentlicher Nachteil ist auch darin zu sehen, daß der Deckel nicht durch die Schlauchdichtung nach unten durchgestellt werden kann, beispielsweise um den Deckel anschließend in eine Offenstellung unter das Fahrzeugdach zurückzuverlagern. Der Windabweiser läßt sich somit nur für ein als Oberfirstdach ausgebildetes Fahrzeugdach verwenden.

Der in der DE-A-24 27 928 im vorderen Randbereich der Dachöffnungen eines Kraftfahrzeugs angeordnete Windabweiser wird beim Öffnen des Daches aus einer den vorderen Rand der Dachöffnung abdichtenden Versenkstellung in eine über die Kontur des Daches hinausragende Betriebsstellung hochgeschwenkt. Dies wird durch einen vorderen elastischen Bereich des Windabweisers erreicht, der beim Einschwenken des Windabweisers in seine Versenkstellung elastisch verformt und beim Öffnen des Daches entspannt wird. Nachteilig ist dabei, daß der Windabweiser beim Schließen des Daches von einer aufwendigen Steuereinrichtung in die Versenkstellung zu verlagern ist. Die Steuereinrichtung weist außerdem Winkelhebel auf, die sich im vorderen Randbereich der Dachöffnung nur schwer unterbringen lassen und einen entsprechenden Bauraum erfordern. Die V-förmig ineinandergreifenden Dichtabschnitte des Windabweisers und des Deckels sind über einen größeren Längenbereich genau und damit kostenaufwendig zu fertigen. Ferner wird der als Filmgelenkscharnier ausgebildete vordere Bereich des Windabweisers übermäßig beansprucht, so daß die Haltbarkeit des Filmgelenkscharniers herabgesetzt ist.

Der Erfindung liegt die Aufgabe zugrunde, einen Windabweiser für Schiebedächer von Fahrzeugen nach dem Oberbegriff des Patentanspruches 1 anzugeben, der ein leichtgängiges Schließen des Deckels ermöglicht und den vorderen Rand des Deckels zuverlässig abdichtet.

Diese Aufgabe ist durch die im Kennzeichen des Patentanspruches 1 angegebenen Merkmale gelöst. Besonders vorteilhaft ist, daß der in der Betriebsstellung des Windabweisers schräg nach hinten unten gerichtete Wandabschnitt beim Schließen des Deckels in eine etwa vertikale Lage einschwenkt, in der der Wandabschnitt nahezu keine vertikale Kraft an dem geschlossenen Deckel bewirkt. Ein Verkanten des Deckels in seinen Führungen ist dadurch vermieden, so daß sich dieser leicht verschieben läßt. Beim Schließen und Öffnen des Deckels wird der Wandabschnitt im wesentlichen in Verstellrichtung des Deckels verlagert, so daß der vordere Rand des Deckels nur in einem geringen Maß an dem Wandabschnitt entlanggleitet. Der Wandabschnitt und der Windabweiser werden beim Schließen der Dachöffnung gemeinsam um etwa den gleichen Winkel um einen vorderen elastischen Bereich des Windabweisers geschwenkt. Der vertikale Hebelarm, den der vordere Rand des Deckels von diesem elastischen Bereich aufweist, kann deshalb so gewählt werden, daß der Windabweiser bei einem gewünschten, beispielsweise geringen Verstellweg des Deckels, vollständig eingeschwenkt bzw. ausgestellt wird.

Vorteilhafte Ausgestaltungen sind Gegenstand von Unteransprüchen.

Ein Ausführungsbeispiel der Erfindung wird anhand einer Zeichnung näher erläutert. Es zeigen:

Fig. 1 eine Dachöffnung eines Kraftfahrzeugs, mit einem im vorderen Randbereich angeordneten Windabweiser,

Fig. 2 eine vergrößerte Darstellung eines mittleren Längsschnittes durch den Windabweiser in Fig. 1 in seiner Versenkstellung,

Fig. 3 eine der Fig. 2 entsprechende Ansicht des Windabweisers in seiner Betriebsstellung,

Fig. 4 eine Vorderansicht eines in den Windabweiser eingebrachten Versteifungselements

Fig. 5 eine Seitenansicht des Versteifungselements in Fig. 4 und

Fig. 6 eine Fig. 3 entsprechende Ansicht, mit einer durch die Versteifungseinlage und das Versteifungselement gebildeten Querachse.

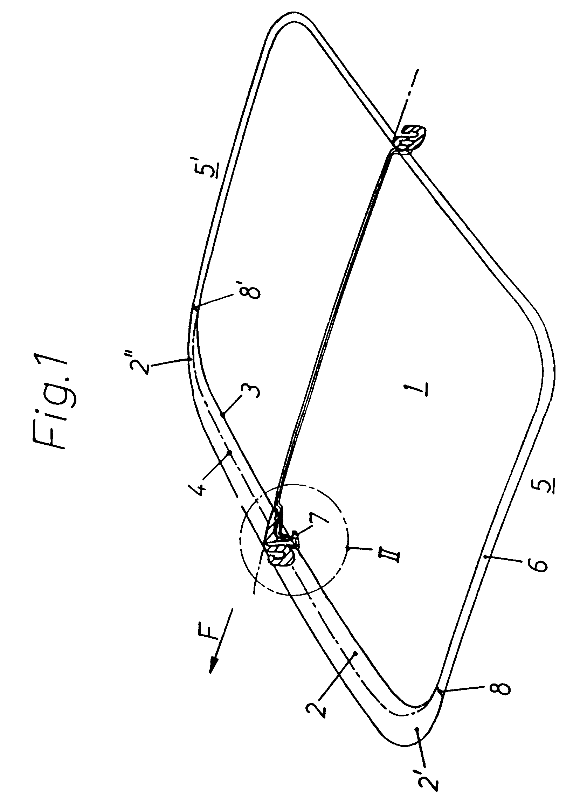

Eine Dachöffnung eines Kraftfahrzeugs mit Schiebedach ist in Fig. 1 von einem in Fahrtrichtung F längsverschiebbaren Deckel 1 verschlossen. Im vorderen Randbereich der Dachöffnung ist ein quer zum Fahrzeug verlaufender Windabweiser 2 befestigt, der sich beim Öffnen des Daches aus seiner Versenkstellung 3 in seine durch Strichpunktlinien angedeutete Betriebsstellung 4 über die Kontur des Daches nach oben selbsttätig ausstellt. Der Windabweiser 2 verläuft über die vorderen Ecken 2', 2'' bis in die Seitenbereiche 5, 5' der Dachöffnung und grenzt dort an ein über den hinteren Umfangsbereich der Dachöffnung verlaufendes Dichtungselement 6 an. Der Windabweiser 2 ist über eine an seiner Unterseite ausgebildete und nachfolgend beschriebene Schlauchdichtung 7 an den Verbindungsstellen 8, 8' an dem hinteren Dichtungselement 6 angeklebt oder anvulkanisiert. Die Übergangsbereiche bildenden seitlichen Ecken 2', 2'' des Windabweisers 2 können auch durch separate Teile gebildet sein, die beispielsweise an dem Windabweiser 2 anvulkanisiert sind.

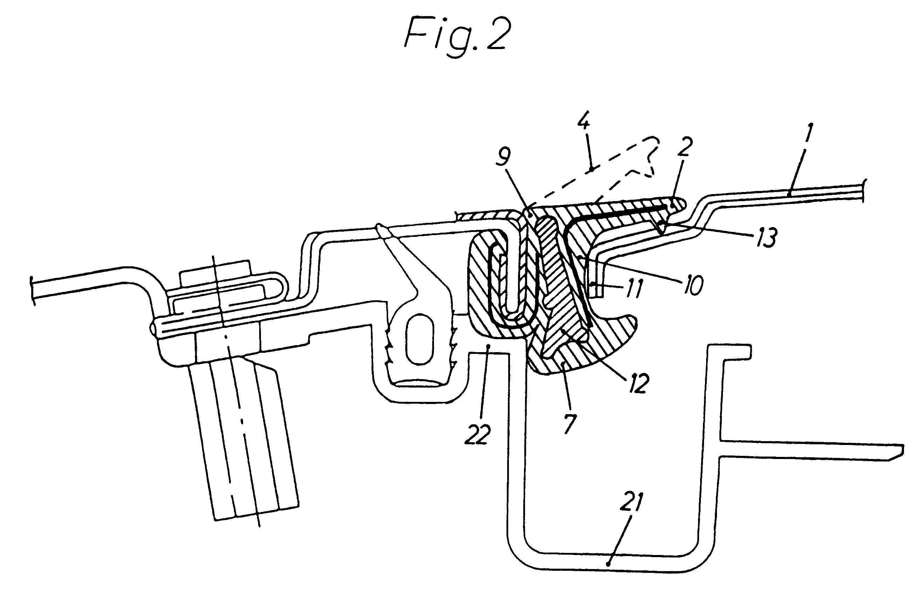

In Fig. 2 ist der Windabweiser 2 gemäß Kreis II in Fig. 1 in einem mittleren Längsschnitt in seiner Versenkstellung vergrößert dargestellt. Der Windabweiser 2 weist einen vorderen elastischen Bereich 9 auf, der etwa quer über die Dachöffnung verläuft. Beim Öffnen des Daches schwenkt der Windabweiser 2 selbsttätig um die durch den elastischen Bereich 9 gebildete Querachse aus seiner dargestellten Versenkstellung in die durch Strichlinien angedeutete Betriebsstellung 4. Dies wird durch elastisches Entspannen des vorderen Bereiches 9 und der unterhalb des Windabweisers 2 angeordneten Schlauchdichtung 7 erreicht. Vom vorderen unteren Bereich des Windabweisers 2 ist ein Wandabschnitt 10 schräg nach hinten unten gerichtet, der beim Schließen der Dachöffnung von der vorderen Stirnseite 11 des Deckels 1 im wesentlichen nach vorne verlagert wird. Dabei wird der Windabweiser 2 in seine dargestellte Versenkstellung eingeschwenkt und der vordere elastische Bereich 9 verformt. Der Wandabschnitt 10 ist bei dem Ausführungsbeispiel durch die vorne mit der Unterseite des Windabweisers 2 verbundene Schlauchdichtung 7 gebildet, die beim Schließen des Deckels 1 ebenfalls elastisch verformt wird. Der Wandabschnitt 10 könnte aber auch durch ein separates oder ein anderes Element gebildet sein. Der vordere Rand der Dachöffnung ist von dem an der Stirnseite 11 des Deckels 1 anliegenden Wandabschnitt 10 abgedichtet. Der Innenraum der Schlauchdichtung 7 ist von einer elastischen Kerneinlage 12 ausgefüllt, die sich nach dem Öffnen des Daches entspannt und dabei den Windabweiser 2 in seine Betriebsstellung ausstellt. Die Kerneinlage 12 kann jedoch auch entfallen, wenn beispielsweise die Schlauchdichtung 7 und/oder der vordere elastische Bereich 9 entsprechend ausgebildet ist, so daß der Windabweiser 2 nach dem Öffnen des Daches in die Betriebsstellung 4 ausgestellt und in dieser Lage ausreichend stabil gehalten wird. Bei dem Ausführungsbeispiel ist der vordere Bereich des Deckels 1 zur Aufnahme des Windabweisers 2 nach unten zurückgezogen ausgebildet, so daß die Außenseite des Windabweisers 2 in Versenkstellung etwa bündig mit der Kontur des Daches verläuft. Im hinteren Bereich des Windabweisers 2 ist eine in Querrichtung verlaufende, nach unten abstehende Dichtungslippe 13 ausgebildet, die bei geschlossener Dachöffnung an der Oberseite des Deckels 1 anliegt.

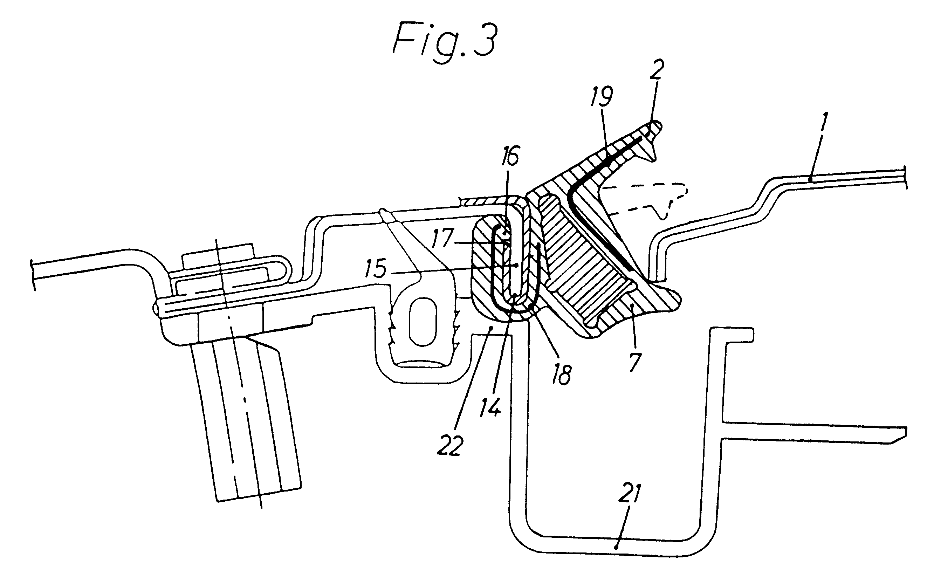

In Fig 3 ist der Deckel 1 etwas zurückgezogen und der Windabweiser 2 in seine Betriebsstellung ausgestellt. Zur Befestigung des Windabweisers 2 an dem vorderen Randbereich der Dachöffnung ist an der Vorderseite der Schlauchdichtung 7 eine Vertiefung 14 ausgebildet, in die der nach unten abgewinkelte vordere Rand 15 der Dachöffnung eingesteckt ist. Anstelle des Randes 15 könnte aber auch eine andere Stützwund zur Befestigung des Windabweisers 2 verwendet werden, die von dem vorderen Rand der Dachöffnung in eine willkürliche Richtung absteht und in eine entsprechend ausgebildete Vertiefung im vorderen Bereich des Windabweisers 2 eingesteckt werden kann. Weiterhin ist in der Einstecköffnung der Vertiefung 14 eine nach innen gerichtete Stützschulter 16 ausgebildet, die einen Absatz 17 im Rand 15 der Dachöffnung hintergreift. Außerdem ist in die Vorderseite der Schlauchdichtung 7 eine U-förmige, elastische Versteifungseinlage 18 eingebracht, die den in die Vertiefung 14 eingesteckten Rand 15 der Dachöffnung umgreift und zwischen ihren Schenkeln einklemmt. Zur Versteifung ist in den Windabweiser 2 und in den schräg nach hinten unten abstehenden Wandabschnitt 10 je ein Schenkel eines etwa V-förmigen Versteifungselements 19 eingebracht. Dieses Versteifungselement 19 kann aus Stahl oder aus Kunststoff gefertigt sein. Es sind aber auch andere Materialien zur Verwendung geeignet.

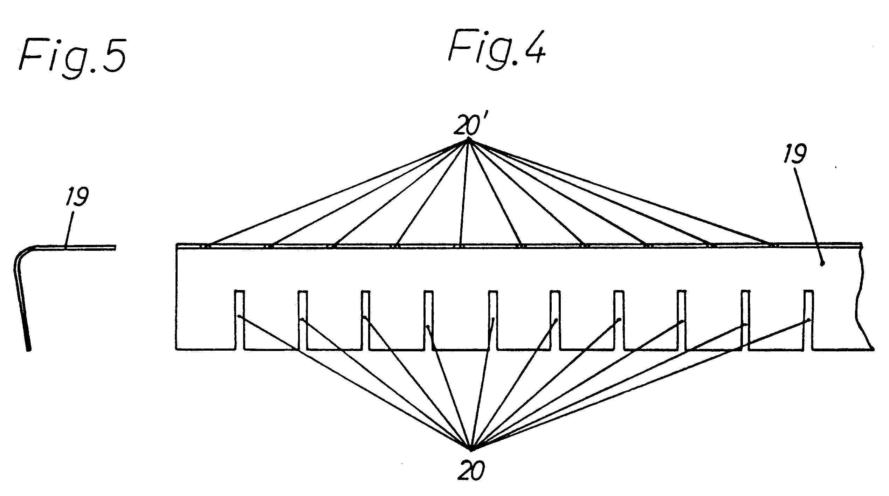

Das Versteifungselement 19 ist in Fig. 4 in einer Vorderansicht eines Schenkels dargestellt. In jedem der Schenkel sind zum betreffenden Außenrand offene Schlitze 20, 20' ausgebildet, die in gleichmäßigen Abständen zueinander parallel verlaufen und zu den Schlitzen 20, 20' des jeweils anderen Schenkels seitlich versetzt sind. Durch die Schlitze 20, 20' sind die Schenkel des Versteifungselements 19 biegbar. Die Schlitze 20, 20' erleichtern somit einerseits die elastische Verformung des Windabweisers beim Aus- und Einschwenken und ermöglichen andererseits eine zur Abdichtung bessere Anpassung an die Vorderseite des Deckels.

In Fig. 5 ist das Versteifungselement 19 in Seitenansicht dargestellt. Der Winkel zwischen den V-förmig angrenzenden Schenkeln entspricht der Schrägstellung des Wandabschnitts 10 in Fig. 2 gegenüber dem Windabweiser 2.

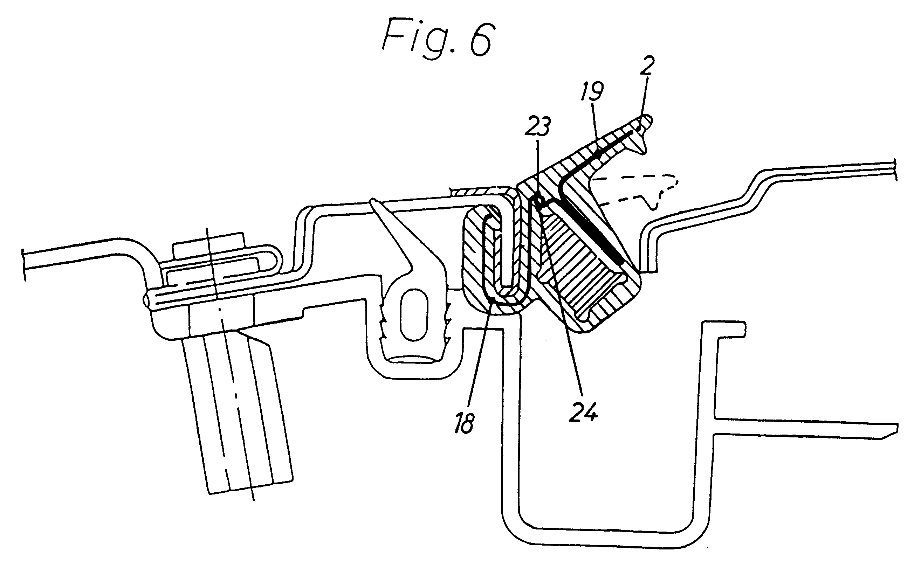

Die Querachse im vorderen elastischen Bereich des Windabweisers 2 ist in Fig. 6 durch einen U-förmigen nach hinten unten abgewinkelten Schenkelrand 23 der Versteifungseinlage 18 und durch ein etwa von der Basis des V-förmigen Versteifungselements 19 nach vorne oben abstehendes, in den U-förmigen Schenkelrand 23 eingreifendes Wandungsteil 24 gebildet.

Wie man in Fig. 2 und Fig. 3 erkennt, ist an dem Randbereich der Dachöffnung eine Dachkassette 21 befestigt, die eine Stützschulter 22 aufweist, die im eingebauten Zustand von unten an dem vorderen Bereich der Schlauchdichtung 7 anliegt und diese an dem Rand 15 festhält.

**Patentansprüche**

1. Windabweiser (2) für Schiebedächer von Fahrzeugen, der am vorderen Randbereich einer von einem längsverschiebbaren Deckel (1) verschließbaren Dachöffnung quer zum Fahrzeug befestigt ist und von dem ein Wandabschnitt (10) schräg nach hinten unten absteht, der beim Schließen der Dachöffnung von der Stirnseite des Deckels unter elastischer Verformung eines Abschnittes des Windabweisers verlagert wird und dabei den in seiner Betriebsstellung von der Kontur des Daches abstehenden Windabweiser (2) um eine durch einen vorderen elastischen Bereich (9) des Windabweisers gebildete Querachse nach unten in eine etwa horizontale Versenkstellung einschwenkt, dadurch gekennzeichnet, daß der Wandabschnitt (10) vom vorderen unteren Bereich des Windabweisers (2) absteht und beim Schließen der Dachöffnung nach vorne verlagert wird, und der Windabweiser (2) in seiner Versenkstellung den vorderen Rand des Deckels (1) übergreift.

2. Windabweiser nach Anspruch 1, dadurch gekennzeichnet, daß der Wandabschnitt (10), zusammen mit der Stirnseite des Deckels (1) den vorderen Rand (15) der Dachöffnung abdichtet.

3. Windabweiser nach Anspruch 2, dadurch gekennzeichnet, daß der Wandabschnitt (10) durch ein hinteres Wandelement einer mit dem vorderen unteren Bereich des Windabweisers (2) verbundenen Schlauchdichtung (7) gebildet ist.

4. Windabweiser nach Anspruch 3, dadurch gekennzeichnet, daß der Innenraum der Schlauchdichtung (7) mit einer elastischen Kerneinlage (12) ausgefüllt ist.

5. Windabweiser nach Anspruch 1, dadurch gekennzeichnet, daß der Windabweiser (2) über die vorderen Ecken (2', 2'') in die Seitenbereiche (5, 5') der Dachöffnung verläuft und dort an ein über den hinteren Umfangsbereich der Dachöffnung verlaufendes Dichtungselement (6) angrenzt.

6. Windabweiser nach Anspruch 5, dadurch gekennzeichnet, daß der Windabweiser (2) an das Dichtungselement (6) anvulkanisiert oder angeklebt ist.

7. Windabweiser nach Anspruch 1, dadurch gekennzeichnet, daß der vordere Bereich des Deckels (1) derart nach unten zur Aufnahme des Windabweisers (2) zurückgezogen ausgebildet ist, daß der Windabweiser (2) In seiner Versenkstellung etwa bündig mit der Kontur des Daches verläuft.

8. Windabweiser nach Ansprch 1, dadurch gekennzeichnet, daß der Windabweiser (2) im hinteren Bereich eine in Querrichtung nach unten abstehende Dichtungslippe (13) aufweist, die bei geschlossener Dachöffnung an der Oberseite des Deckels (1) anliegt.

9. Windabweiser nach Anspruch 3, dadurch gekennzeichnet, daß an der Vorderseite der Schlauchdichtung (7) eine Vertiefung (14) ausgebildet ist, in die eine vom vorderen Randbereich der Dachöffnung abstehende Stützwand einsteckbar ist.

10. Windabweiser nach Anspruch 9, dadurch gekennzeichnet, daß die Stützwand durch den nach unten abgewinkelten vorderen Rand (15) der Dachöffnung gebildet ist.

11. Windabweiser nach Anspruch 9, dadurch gekennzeichnet, daß in der Einstecköffnung der Vertiefung (14) eine Stützschulter (16) ausgebildet ist, die einen Absatz (17) in der Stützwand hintergreift.

12. Windabweiser nach Anspruch 9, dadurch gekennzeichnet, daß in die Vorderseite der Schlauchdichtung (7) eine U-förmige, elastische Versteifungseinlage (18) eingebracht ist, die den Randabschnitt der Stützwand umgreift und zwischen ihren Schenkeln einklemmt.

13. Windabweiser nach Anspruch 1, dadurch gekennzeichnet, daß in den Windabweiser (2) und in den schräg nach hinten unten abstehenden Wandabschnitt (10) je ein Schenkel eines etwa V-förmigen Versteifungselements (19) eingebracht ist.

14. Windabweiser nach Anspruch 13, dadurch gekennzeichnet, daß in den Schenkeln des Versteifungselements (19) jeweils zum Außenrand offene Schlitze (20, 20') ausgebildet sind.

15. Windabweiser nach Anspruch 14, dadurch gekennzeichnet, daß die Schlitze (20, 20') in gleichen Abständen parallel ausgebildet und gegenüber den Schlitzen (20, 20') des jeweils anderen Schenkels seitlich versetzt sind.

16. Windabweiser nach Anspruch 10, 12 und 13, dadurch gekennzeichnet, daß die Querachse im vorderen elastischen Bereich des Windabweisers (2) durch einen etwa U-förmig nach hinten unten abgewinkelten Schenkelrand (23) der Versteifungseinlage (18) und durch ein etwa von der Basis des V-förmigen Versteifungselements (19) nach vorne oben abstehendes, in den U-förmigen Schenkelrand (23) eingreifendes Wandungsteil (24) gebildet ist.

## Claims

1. A wind deflector (2) for sliding roofs of vehicles, which is secured transversely of the vehicle on the forward marginal region of a roof opening closable by a longitudinally-displaceable lid (1) and from which a wall section (10) protrudes obliquely rearwards and downwards, which in the closing of the roof opening is shifted from the end side of the lid, with elastic deformation of a section of the wind deflector, and in this shift pivots the wind deflector (2), which in its operating position protrudes from the contour of the roof, downwards about a transverse axis formed by a forward elastic region (9) of the wind deflector, into an approximately horizontal countersunk position, characterised in that the wall section (10) protrudes from the forward lower region of the wind deflector (2), and in the closing of the roof opening is shifted forwards, and the wind deflector (2) in its countersunk position grasps over the forward edge of the lid (1).

2. A wind deflector according to Claim 1, characterised in that the wall section (10) together with the end side of the lid (1) seals off the front margin (15) of the roof opening.

3. A wind deflector according to Claim 2, characterised in that the wall section (10) is formed by a rear wall element of a flexible tube seal (7) connected with the forward lower region of the wind deflector (2).

4. A wind deflector according to Claim 3, characterised in that the interior space of the flexible tube seal (7) is filled out with an elastic core inlay (12).

5. A wind deflector according to Claim 1, characterised in that the wind deflector (2) extends over the forward corners (2', 2'') into the lateral regions (5, 5') of the roof opening and there adjoins a seal element (6) extending over the rear circumferential region of the roof opening.

6. A wind deflector according to Claim 5, characterised in that the wind deflector (2) is vulcanised or stuck to the seal element (6),

7. A wind deflector according to Claim 1, characterised in that the forward region of the lid (1) is made "drawn back downwards" for the reception of the wind deflector (2) in such a way that the wind deflector (2) in its countersuck position extends approximately flush with the contour of the roof.

8. A wind deflector according to Claim 1, characterised in that the wind deflector (2) has in the rear region a sealing lip (13) protruding downwards in the transverse direction, which rests on the upper side of the lid (1) when the roof opening is closed.

9. A wind deflector according to Claim 3, characterised in that on the forward side of the flexible tube seal (7) there is formed a depression (14) into which a support wall protruding from the forward marginal region of the roof opening is insertable.

10. A wind deflector according to Claim 9, characterised in that the support wall is formed by the downwardly angled-off forward margin (15) of the roof opening.

11. A wind deflector according to Claim 9, characterised in that, in the insertion opening of the depression (14), a support shoulder (16) is formed which grasps behind a step (17) in the support wall.

12. A wind deflector according to Claim 9, characterised in that in the front side of the flexible tube seal (7) there is introduced a U-shaped elastic stiffening insert (18) which grasps around the marginal section of the support wall and clamps it between the legs of the insert.

13. A wind deflector according to Claim 1, characterised in that into each of the wind deflector (2) and the obliquely, downwardly and rearwardly protruding wall section (10) there is introduced one leg of a somewhat V-shaped stiffening element (19).

14. A wind deflector according to Claim 13, characterised in that in each of the legs of the stiffening element (19) there are formed slots (20, 20') each open to the outer edge.

15. A wind deflector according to Claim 14, characterised in that the slots (20, 20') are made parallel at equal intervals and are laterally offset in relation to the slots (20, 20') of the other leg in each case.

16. A wind deflector according to Claims 10, 12 and 13, characterized in that the transverse axis in the forward elastic region of the wind deflector (2) is formed by a leg margin (23), angled off downwards to the rear in approximately U-form, of the stiffening insert (18) and by a wall part (24) protruding forwards and upwards and engaging in the U-shaped leg margin (23).

## Revendications

1. Déflecteur d'air (2) pour des toits ouvrants de véhicules, qui est fixé en travers du véhicule sur la zone du bord antérieur d'une ouverture de toit pouvant être fermée par un couvercle (1) pouvant coulisser longitudinalement et à partir duquel part obliquement vers l'arrière et vers le bas une section de paroi (10), qui est déplacée lors de la fermeture de l'ouverture du toit à partir du côté frontal du couvercle sous déformation élastique d'une section du déflecteur d'air et ce faisant fait basculer le déflecteur d'air (2) partant dans sa position de fonctionnement du pourtour du toit autour d'un axe transversal constitué par une zone élastique antérieure (9) du déflecteur d'air vers le bas dans une position d'enfoncement à peu près horizontale, déflecteur d'air, caractérisé en ce que la section de paroi (10) part de la zone antérieure inférieure du déflecteur d'air (2) et lors de la fermeture de l'ouverture du toit est déplacée vers l'avant et en ce que le déflecteur d'air (2) dans sa position enfoncée vient en prise sur le bord antérieur du couvercle (1).

2. Déflecteur d'air selon la revendication 1, caractérisé en ce que la section de paroi (10) rend étanche en même temps que le côté frontal du couvercle (1) le bord antérieur (15) de l'ouverture du toit.

3. Déflecteur d'air selon la revendication 2, caractérisé en ce que la section de paroi (10) est formée par un élément arrière de paroi d'un joint d'étanchéité en forme de tuyau (7) relié à la zone antérieure inférieure du déflecteur d'air (2).

4. Déflecteur d'air selon la revendication 3, caractérisé en ce que l'espace intérieur du joint d'étanchéité (7) en forme de tuyau est rempli d'un noyau élastique (12).

5. Déflecteur d'air selon la revendication 1, caractérisé en ce que le déflecteur d'air (2) s'étend sur les coins antérieurs (2', 2'') dans les zones latérales (5, 5') de l'ouverture du toit et à cet endroit touche un élément d'étranchéité (6) s'étendant sur la zone périphérique arrière de l'ouverture du toit.

6. Déflecteur d'air selon la revendication 5, caractérisé en ce que le déflecteur d'air (2) est soudé par vulcanisation ou collé sur l'élément d'étranchéité.

**7.** Déflecteur d'air selon la revendication 1, caractérisé en ce que la zone antérieure du couvercle (1) est formée avec une partie en retrait vers le bas pour recevoir le déflecteur d'air (2), de telle façon que le déflecteur d'air (2) s'étend dans sa position enfoncée à peu près à fleur du pourtour du toit.

**8.** Déflecteur d'air selon la revendication 1, caractérisé en ce que le déflecteur d'air (2) présente dans la zone arrière une lèvre d'étranchéité (13) partant dans le sens transversal vers le bas, lèvre qui repose, quand l'ouverture du toit est fermée, sur le côté supérieur du couvercle (1).

**9.** Déflecteur d'air selon la revendication 3, caractérisé en ce que sur le côté antérieur du joint d'étanchéité (7) en forme de tuyau, est formée une cavité (14), dans laquelle peut s'enfoncer une paroi d'appui partant de la zone du bord antérieur de l'ouverture du toit.

**10.** Déflecteur d'air selon la revendication 9, caractérisé en ce que la paroi d'appui est formée par le bord (15) antérieur rabattu vers le bas de l'ouverture du toit.

**11.** Déflecteur d'air selon la revendication 9, caractérisé en ce qu'on forme dans l'ouverture d'enfoncement de la cavité (14) un épaulement d'appui (16) qui vient en prise par l'arrière avec un décrochement (17) dans la paroi d'appui.

**12.** Déflecteur d'air selon la revendication 9, caractérisé en ce que dans le côté antérieur du joint d'étanchéité (7) en forme de tuyau, est placé un insert de renforcement (18) en forme d'U, élastique, qui entoure la section du bord de la paroi d'appui et vient en serrage entre ses branches.

**13.** Déflecteur d'air selon la revendication 1, caractérisé en ce que dans le déflecteur d'air (2) et dans la section de paroi (10) partant obliquement vers l'arrière et vers le bas, est logé chaque fois une branche d'un élément de renforcement (19) ayant à peu près la forme d'un V.

**14.** Déflecteur d'air selon la revendication 13, caractérisé en ce que l'on forme dans les branches de l'élément de renforcement (19) des fentes (20, 20') ouvertes vers le bord extérieur.

**15.** Déflecteur d'air selon la revendication 14, caractérisé en ce que les fentes (20, 20') sont formées parallèlement à intervalles égaux et sont décalées latéralement par rapport aux fentes (20, 20') de l'autre branche.

**16.** Déflecteur d'air selon les revendications 10, 12 et 13, caractérisé en ce que l'axe transversal dans la zone antérieure élastique du déflecteur d'air (2) est formé par un bord de branche (23) de l'insert de renforcement (18) ayant à peu près la forme d'un U recourbé vers l'arrière et vers le bas, et par un élément de paroi (24) partant à peu près de la base de l'élément de renforcement (19) en forme de V vers l'avant et vers le haut, et venant en prise dans le bord de la branche (23) en forme d'U.

# Fig.1

Fig.2

EP 0 250 925 B1

Fig.3

EP 0 250 925 B1

Fig.4

Fig.5

Fig. 6

EP 0 250 925 B1